# EUROPEAN PATENT SPECIFICATION

(11) **EP 0 607 495 B1**
(45) Date of publication and mention of the grant of the patent: **14.01.1998**
(21) Application number: 93113169.2
(22) Date of filing: 17.08.1993
(51) Int. Cl.: G01N 27/447

(54) **Capillary electrophoresis**
Kapillar-Elektrophorese
Electrophorèse capillaire

(30) Priority: 26.08.1992 JP 226894/92; 26.10.1992 JP 287264/92; 21.01.1993 JP 8151/93
(43) Date of publication of application: 27.07.1994
(73) Proprietor: HITACHI, LTD., Chiyoda-ku, Tokyo 101 (JP)
(72) Inventor: Kamahori, Masao, Hatoyama-machi, Hiki-gun, Saitama (JP); Yamada, Takashi, Hatoyama-machi, Hiki-gun, Saitama (JP)
(74) Representative: Strehl Schübel-Hopf Groening & Partner

(56) References cited:
- US-A- 5 085 756
- US-A- 5 110 424

## Description

### Field of the Invention

The invention relates to a method and apparatus for analyzing a nucleic acid or protein by capillary gel electrophoresis; a method and apparatus for producing a gel filled capillary to be used in capillary gel electrophoresis; and to a microinjector for use in injecting samples in a capillary for capillary gel electrophoresis.

### Background of the Invention

Capillary electrophoresis is superior to high performance liquid chromatography in that the amount of sample required for analysis can be less than 1/1,000 of the amount required for liquid chromatography and in that the separation performance as compared with liquid chromatography is tens of times higher. Capillary electrophoresis can be conducted in a shorter period of time than that for conventional slab gel electrophoresis and the like, because a higher voltage can be applied. Furthermore, when one end of the capillary is used as an injector, the samples can be injected automatically to provide an automated capillary electrophoresis apparatus. Capillary electrophoresis is described, for example, in Science, 222, 266-272 (1983). DNA sequencing is described in Analytical Chemistry, 62, 900-903 (1990).

Recently, capillary electrophoresis has been actively applied to many fields. In particular, nucleic acids and proteins have been analyzed as part of the recent development in biotechnological studies. In order to detect nucleic acid and proteins, ultraviolet detection and fluorescent detection have been used. For such detection, an on-column detection device that is integrated with the capillary is commonly employed.

In the analysis of nucleic acids, and particularly in DNA sequencing, the capillary electrophoresis is usually performed using a polyacrylamide gel. By this method, approximately 300 bases can be identified within about 45 minutes. Although it has been reported that DNA fragments consisting of about 10,000 bases have been separated within 20 minutes, the resolution was in the order of 1,000 bases in the case of DNA fragments consisting of thousands of bases. The analysis of DNA fragments consisting of about 10,000 bases has been described in Journal of Chromatography, 516, 33-48 (1990).

In the conventional on-column detection method with the use of a detector integrated with a capillary, the detection was performed by providing an optical path in part of the capillary. In general, an agarose gel was used as the slab gel electrophoresis for separating DNA consisting of 1,000 or more bases. In order to separate DNA having more bases than this and up to thousands of bases, it is necessary to use an agarose gel, rather than a polyacrylamide gel. However, an agarose gel has a poor light transmittance characteristic and is therefore unsuitable for on-column detection. As a result, it has been highly difficult to separate DNAs consisting of thousands of bases by capillary electrophoresis. Further, an agarose gel has heat resistance problems so it has been difficult to use such a gel in capillary gel electrophoresis where a high voltage is applied and Joule heating is created.

Conventionally, a gel filled capillary has been produced by packing an acrylamide solution containing a polymerizing agent into a capillary by using, for example, a syringe and then effecting gelling polymerization in the capillary. However, this method suffers from a problem that air bubbles are formed in the polymerization of the acrylamide and thus the acrylamide gel thus formed is practically unusable. To counteract this problem, a method has been employed wherein the acrylamide is polymerized under a high hydraulic pressure and also wherein a carefully degassed acrylamide solution is treated by suction or vacuum and packed into the capillary. U.S. Patent No. 4,810,456 discloses a method for polymerizing acrylamide under high hydraulic pressure. A method for vacuum injection of a degassed acrylamide solution is disclosed in Analytical Chemistry, 64, 1221-1225 (1992).

The production of a capillary gel by polymerizing acrylamide under a high hydraulic pressure has been performed by packing an acrylamide solution containing a polymerizing agent in a capillary by using, for example, a syringe and subjecting the capillary packed with the acrylamide solution to gelling polymerization under a high hydraulic pressure. This method suffers from a problem that the acrylamide solution is diluted before the polymerization of the acrylamide, and thus it is difficult to form a gel with high reproducibility of the result. In addition, the load in the capillary increases as the inner diameter of the capillary decreases, and, as a result, the injection becomes difficult. Accordingly, most of the capillaries usable in this method have an inner diameter of at least as great as 75 µm and there have been only a few reported examples of using capillaries having an inner diameter of 50 µm. Although it is possible to use, for example, a pump for packing the acrylamide solution, a long channel from the solution tank to the capillary is inevitably required when a pump is employed, and therefore, a large amount of the acrylamide solution is required. Furthermore, a considerably long period of time elapses during feeding the solution from the pump to the capillary, which causes another problem that the polymerizing agent added before the injection causes the acrylamide to gel in the flow channel.

With the other conventional method involving the vacuum or suction injection of a carefully degassed acrylamide solution and packing thereof in a capillary, there exists a problem that the vacuum injection of the acrylamide solution makes the pressure in the capillary negative, thus creating a potential for air bubbles to be formed if the degassing is insufficient.

Conventional methods of injecting a sample include gravity injection, which relies upon the difference in gravity, pressure injection, which relies upon the use of a difference in pressure and electrokinetic injection. The injection method affects the analytical accuracy and reproducibility of results with capillary electrophoresis. With these conventional methods, control is difficult since the difference in gravity or pressure is difficult to control when a minute amount of the sample is injected. In particular, a trace amount of a sample is difficult to inject by the methods of gravity injection and pressure injection. In the electrokinetic injection, on the other hand, the amount of sample to be injected is determined by the amount and duration of the applied voltage. Accordingly, a trace amount of a sample can be readily injected with high accuracy by controlling the amount and duration of the applied voltage. As a result, the electrokinetic injection method is the most commonly employed method at the present time. This method, however, suffers from a problem that the amount of a sample to be injected varies depending on the components contained therein, since the mobility varies from substance to substance.

One solution proposed for this problem has been set forth in Japanese Patent Laid-Open Application No. 253247/1988, wherein it has been proposed to meter a sample with a rotary injector and inject the sample under pressure. Specifically, the sample is sandwiched between a gel and a buffer during the step of injecting the sample. As a result, the sample is diluted with the buffer before being incorporated into the gel by pressure injection with the result that the sensitivity and separation performance are degraded due to an increase in the widening of bands caused by, for example, disorders in the band.

### Summary of the Invention

In order to solve the problem of performing gel electrophoresis for DNAs having thousands of bases using an agarose gel, it is an object of the present invention to perform the analysis by capillary electrophoresis using an agarose gel to achieve separation and then conducting on-column detection with a detection device packed with a polyacrylamide gel, which has an excellent light transmittance characteristic. Specifically, the steps involve: (1) connecting the agarose gel to the polyacrylamide gel by using a glass connector that is hermetically sealed with respect to the polyacrylamide gel so that the passage characteristics and the electrical conductivity are maintained for the sample that has been separated by the agarose gel; and (2) suppressing the value of the current flowing through the capillary to thereby suppress Joule heating in the capillary.

The use of an agarose gel in capillary electrophoresis serves to facilitate the separation of DNA consisting of over thousands of bases. Since a polyacrylamide gel that has excellent light transmittance is used in the detection section, the DNA separated by the agarose gel can be optically detected by an on-column detection device while maintaining the high separation performance achieved by using the agarose gel. Further, Joule heating can be suppressed by selecting an appropriate buffer concentration.

It is another object of the present invention to produce a gel filled capillary that is free from air bubbles and that can be reliably produced by using a gel solution that is fed by a pump, for example, into a flow channel connected to the capillary from another flow channel so as to prevent the gelation of the acrylamide solution in the flow channel due to adding the polymerizing agent before injection into the capillary.

By this method, since an acrylamide solution is packed in the capillary with the pump, the solution can be fed under a high pressure and an acrylamide gel can be packed in a capillary having an inner diameter of 50 µm and less. Further, since the gel solution is fed into the capillary feeding flow channel from another flow channel, the solution does not gel during the feeding operation.

It is a further object of the invention to provide a device for metering a sample during injection of a sample in a capillary gel electrophoresis apparatus method by using a micro-injector having a rotary channel switching valve and a conductive partition provided between a buffer tank and a sample metering section. By the present invention, a minute amount of a sample can be injected into the capillary with highly reproducible results. Furthermore, since a conductive partition portion is located between the buffer tank and the sample metering section, disorders in the sample and the diffusion of the sample problem can be suppressed, such as dilution, and therefore the widening of bands can be reduced. Since the conductive partition is used between the buffer tank and the sample metering section, a high voltage required for electrophoresis can be applied and the electrophoresis is not interfered with by the injector.

### Brief Description of the Drawings

Fig. 1 is a block diagram showing the construction of a capillary electrophoresis apparatus according to an embodiment of the present invention.

Fig. 2 is a diagram showing the results of analysis of a DNA fragment obtained by using a capillary electrophoresis apparatus according to an embodiment of the present invention.

Fig. 3 is a diagram of a connector used to connect the optical detection section with the capillary tube.

Fig. 4 is a diagram of the construction of a connection of the optical detection section to the capillary tube.

Fig. 5 is a graph of an experiment showing the relationship between applied voltage and heat for various buffers.

Fig. 6 is a graph of an experiment showing the relationship between applied voltage and heat for various buffers.

Fig. 7 is a block diagram showing the construction of an apparatus for producing a gel for a capillary gel electrophoresis used in the present invention.

Fig. 8(a) and 8(b) show a schematic sectional view of a flow channel connection and switching device used in an embodiment of the present invention.

Fig. 9 is a diagram showing the results of analysis of a DNA fragment obtained according to an embodiment of the method of the present invention.

Fig. 10(a) is a schematic sectional view of part of a capillary gel electrophoresis apparatus having a micro injector constructed according to an embodiment of the present invention.

Fig. 10(b) is a partial sectional view of the rotor of the micro injector of Fig. 10(a) taken along line 1-1.

Figs. 11(a) and 11(b) are schematic sectional views of the construction of a flow channel connector for the micro injector of the present invention.

Fig. 12 is a diagram showing the results of the analysis of a DNA fragment according to an embodiment of the present invention.

Fig. 13 is a graph showing the relationship between sample concentration and absorbance according to the present invention.

Fig. 14 is a schematic sectional view of a modified embodiment of the rotor shown in Fig. 10(a) taken along section line 2-2.

### Detailed Description of the Preferred Embodiments

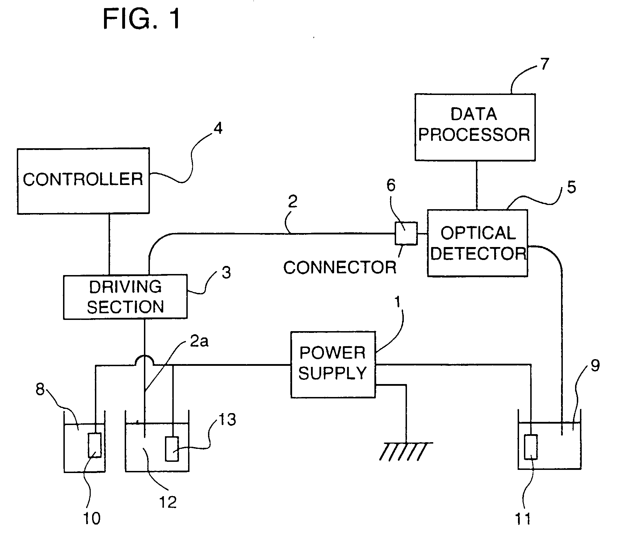

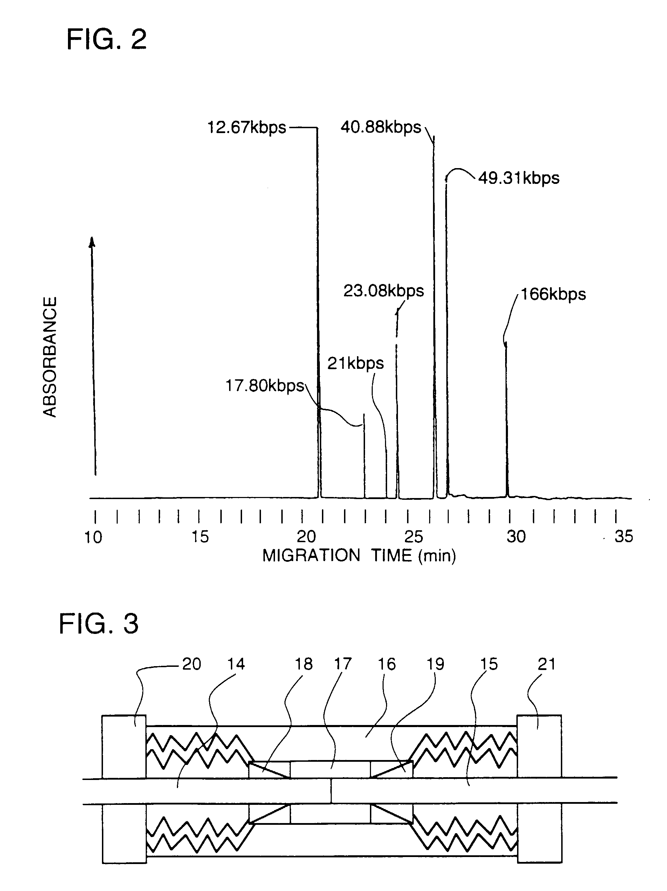

Fig. 1 shows a first embodiment of the present invention in block diagram form. The capillary electrophoresis apparatus has a high voltage power source section 1, an electrophoretic section 2, a driving section 3, a controller section 4 for controlling the driving section 3, an on-column optical detection section 5, a connector 6 for connecting the electrophoretic section 2 to the optical detection section 5, shown in greater detail in Fig. 3, and a data processing section 7 for processing the data detected by the optical section 5. The high voltage power source 1 has an output voltage of between 0 to 30 kV with a polarity switching capability whereby the voltage is applied between a sample container 8 and a buffer tank 9 via electrodes 10 and 11, and between another buffer tank 12 and the buffer tank 9 with the use of electrodes 13 and 11.

The driving section 3 is actuated by a pulse motor (not shown) to control movement in the x, y and z directions of a capillary tube comprising the electrophoretic section 2. The movement of the capillary tube in the x, y and z directions can be performed by programming the distances along these axes in order to enable automated movement of the capillary tube between the electrolyte buffer tank 12 and the sample container 8. Automated use of the apparatus is important since the apparatus is intended to handle the processing of many samples, one after another for automated analysis.

To inject a sample into the capillary electrophoresis section 2, the electrokinetic injection method is used, which relies upon migration of the sample through the gel. First, the tip 2a of the capillary tube is removed from buffer tank 12 with no voltage applied between the electrodes by driving section 3 to immerse the tip in the sample container 8. Following the positioning of the capillary tube in the sample container 8, a voltage of a given polarity is applied between electrodes 10 and 11 from power source section 1. By controlling the voltage that is applied and the duration, a given amount of the sample in the sample container 8 is injected by migration into the tip of the capillary by electrophoresis. Next, the glass capillary is returned to the buffer containing tank 12 and the voltage is again applied. This causes the electromigration of the sample in the electrophoretic section 2.

As an example of the capillary gel electrophoresis apparatus of the present embodiment, the electrophoretic section 2 is a fused silica capillary of 50 µm in inner diameter, 375 µm in outer diameter and 50 centimeter in length. A 0.3 % agarose gel is used in the capillary tube, with the concentration of the gel being appropriately selected in accordance with the molecular weight of the components being separated. In the optical detection section 5, a glass capillary packed with a 3% T (g% of acrylamide) and 0.5% C (g% of NN-methylenebisacrylamide in acrylamide) polyacrylamide gel is used. The polyacrylamide gel is prepared by using N,N,N',N'-tetramethylethylenediamine as a polymerizing agent and ammonium peroxydisulfate. When a DNA consisting of over thousands of bases is to be separated, it is preferable to use a polyacrylamide gel of 5% T or less.

The optical detection section 5 preferably includes a UV absorption detector for high performance liquid chromatography modified for on-column detection. The detector can preferably measure absorbance at 260 nm, which corresponds to the DNA measurement wavelength. The data thus obtained in the optical detection section 5 is successively transmitted to the data processing section 7, wherein the data is recorded and processed.

Fig. 2 shows one example of a result obtained by the analysis of a DNA fragment with the capillary electrophoresis apparatus arrangement shown in Fig. 1 when used according to the conditions set forth in the following Table 1. The DNA fragment used in this example is a mixture prepared by completely digesting a mixture of T4dC*-DNA with T4dC-DNA, which are marketed as a DNA molecular weight marker, with a restriction enzyme Bgl I. As Fig. 2 shows, this mixture can be completely separated within 30 minutes.

**Table 1**

| Item | Condition |
|---|---|
| capillary | i.d.: 50 µm, o.d.: 375 µm, length: 50 cm |
| agarose gel | 0.3% agarose H |
| acrylamide gel | 3% T, 0.5% C |
| buffer | 90 mM Tris-borate, pH 8.3 |
| | 2.5 mM EDTA |
| applied voltage | 7.5 kV |
| sample | T4dC/T4dC DNA mixture digested with Bgl I |
| injection method | electrokinetic injection 7.5 kV, 1 s |

One embodiment of the device used for making the connection of the glass capillary packed with an agarose gel to the optical detection section, which is packed with the polyacrylamide gel is set forth in detail, schematically, in Fig. 3. A glass capillary 14 is packed with an agarose gel, for example according to the conditions set forth in Table 1 above, for the electrophoretic section and another glass capillary 15 packed with a polyacrylamide gel is prepared for the optical detection section. These sections are prepared separately and then after each are packed with their respective gel, are inserted into a glass capillary connector 17 fixed in a fitting 16. The glass capillaries are fixed by aligning them in the same straight line and applying a force thereto by using tube gripping pressers 18 and 19 and set screws 20 and 21. The pressers have a bellows-like device that exerts pressure on the capillaries toward their connection point to maintain the capillaries in contact with each other. Preferably, the glass capillary connector 17 is also packed with a polyacrylamide gel so that the capillaries are inserted therein and fixed in such a manner as to push out the gel as the connection is established to ensure a good connection therebetween.

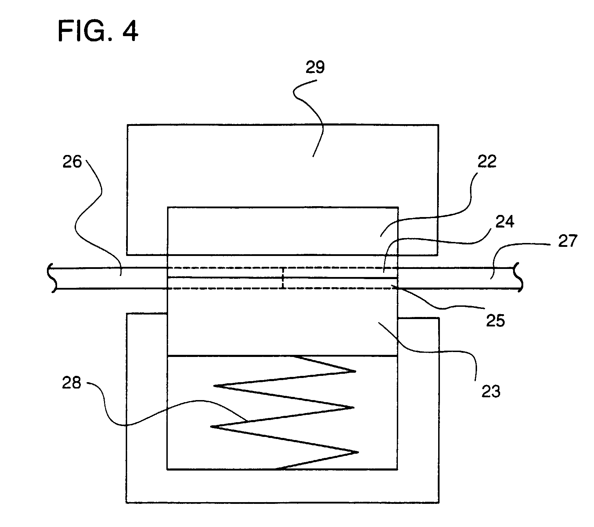

Fig. 4 shows another example or embodiment of a connector that can be used for joining the agarose gel packed capillary tube to the polyacrylamide gel packed tube in the optical detection section. Grooves 24 and 25 for the respective glass capillaries are formed on quartz glass plates 22 and 23. The grooves can be formed by a conventional manner, such as by machining or chemical etching. A glass capillary 26 for the electrophoretic section 2 is packed with an agarose gel and another glass capillary 27 for the optical detection section 5 is packed with a polyacrylamide gel separately from one another. Then the glass capillaries 26 and 27 are put in groove 25 of the quartz glass plate 23 and the quartz glass plate 22 is pressed into contact therewith by a spring 28 contained within an outer box 29. The two quartz plates are closely pressed together, and are preferably provided with a polytetrafluourethylene seal to thereby prevent any leak between the glass capillaries. Alternatively, the quartz glass plate may be replaced by polytetrafluourethylene plates. Further, preferably a polyacrylamide gel is previously applied between the plates so that the gel is squeezed out of the joint as the plates are pressed together.

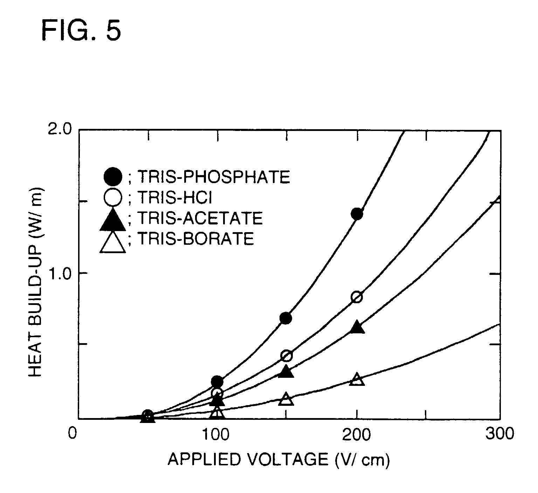

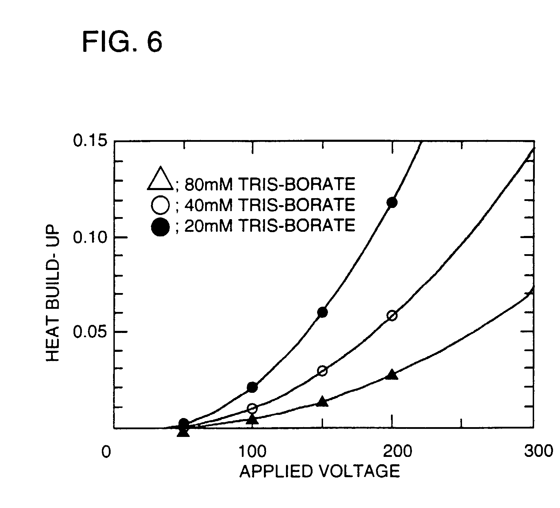

Figs. 5 and 6 disclose the relationship between heat buildup and the buffer that is used in the capillary electrophoresis apparatus. In general, a current flowing through a solution depends on ions contained in the solution. The intensity of the current flowing in the capillary is affected by the buffer used therein. The relationship between the applied voltage and the heat buildup for various buffers is shown in Fig. 5. The relationships between applied voltage and heat buildup at various concentrations of a borate buffer are examined and shown in Fig. 6.

To develop the results shown in Fig. 5, various buffers were used. Each buffer had a concentration of 80 mN and a pH value of 8.3. The capillary used in obtaining the results was a glass capillary of 75 µm in inner diameter and 50 cm in length, packed with a 0.3% agarose gel.

The result of the experiment shows, in Fig. 5, that the heat buildup decreases in the order of Tris-phosphate, Tris-HCl, Tris-acetate and Tris-borate and the heat buildup caused by using the Tris-borate buffer, which shows the least buildup, corresponds to about 1/5 of that caused by using the Tris-phosphate buffer. Further, the heat buildup caused by using a glass capillary at 50 µm in inner diameter and 50 cm in length corresponds to about 1/3 of that caused by using a glass capillary of 75 µm in inner diameter and 50 cm in length. A series of the test results given in Fig. 2 and Fig. 5 suggest that the measurement can be effected when the heat buildup is 0.06 W/m or below.

Based on these results, it is considered that a Tris-borate buffer is advantageous as a buffer for suppressing the value of the current flowing in a capillary. Thus, the relationships between the applied voltage and the heat buildup at various concentrations of a borate buffer were examined, and Fig. 6 shows the results. These results were obtained by using a glass capillary of 50 µm in inner diameter and 50 cm in length packed with a 0.3% agarose gel.

The results shown in Fig. 6 reveal that the heat buildup is proportional to the buffer concentration and is reduced by half when the buffer concentration is halved. It is thus shown that the heat buildup in a capillary can be suppressed at a level of 0.06 W/m or below by maintaining the concentration of the Tris-borate at 80 mN or less, when a common level (about 150 V/cm) of a voltage is applied. It should be noted that a lower concentration of the buffer does not always give a better result, since the buffer also contributes to the maintenance of the appropriate pH value.

According to experiments carried out in accordance with the present invention, the concentration of the buffer should be at least 10 mN. When the impressed voltage is 200 V/cm or above, the use of a Tris-borate buffer of a concentration of 40 mM has also been found to be no problem. When a glass capillary of 50 µm or less in inner diameter is used, the ration of the outer surface area, where the heat is radiated, to the inner volume of the glass capillary, where Joule heating occurs, increases and thus the heat radiation efficiency is improved.

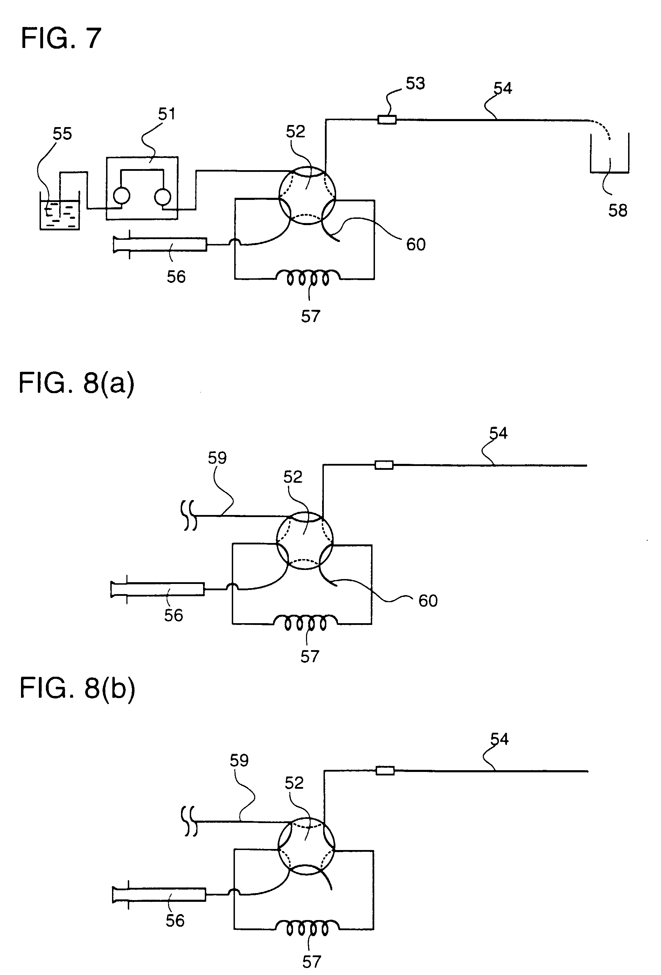

Fig. 7 is directed to another embodiment of the invention relating to the preparation of a gel filled capillary by using, for example, a pump for feeding a gel solution into a first flow channel connected to a capillary from another flow channel so as to prevent the gelling of the acrylamide solution in the flow channel by the polymerizing agent before its injection into the capillary. Since an acrylamide solution is packed in a capillary by using, for example, a pump, the solution can be fed under high pressure and an acrylamide gel can be packed in a capillary of an inner diameter of 50 µm and less. Further, since a gel solution is fed into a flow channel for feeding an acrylamide solution from another flow channel, the acrylamide does not gel during the feeding operation.

An embodiment of a device for producing a gel capillary is shown in Fig. 7, wherein a solution feed pump 51, is connected to a flow channel switching valve 52 at one end and to a solution tank 55 at its other end. The solution feed pump 51 has a flow rate ranging from 0.001 to 10 ml/min and is capable of sustaining a pressure of 400 kg/cm². The solution feed pump is connected to the capillary through a switching valve 52, which may be a 6-way valve. For connecting the capillary, a capillary connector 53, such as a set screw is used.

An acrylamide solution is injected into a capillary 54 in the following manner. First, the solution is fed from a solution tank 55 to a waste solution tank 58, which is disposed at the far end of the capillary 54. As shown in Fig. 8(a), the solution flows from solution feed pump 51 through flow channel 59 through switching valve 52 toward the capillary 54 through a channel in the switching valve represented by a solid line. Next an acrylamide solution, to which a polymerizing agent is added by using a syringe 56, is injected into a loop 57 provided in switching valve 52. The excess acrylamide solution is discarded through a drain 60.

Once the switching valve 52 is switched over, the flow channel as represented by the solid solution line in Fig. 8(b) provides a solution fed from the solution pump 51 to pass through the flow channel 59 and push out the acrylamide solution in loop 57 until it reaches the capillary 54. This packs the acrylamide solution into the capillary. In order to prevent the acrylamide solution from being diluted by contact with the solution contained in the solution tank 55, the acrylamide solution, to which the agent has been added by using syringe 56, is injected into the loop 57 and then a small amount of air is blown into the loop 57 to form an air gap between the solution contained in tank 55 and the acrylamide solution.

In one example of producing a capillary gel, a fused silica capillary of 50 µm in inner diameter, 375 µm in outer diameter and 50 cm in length is used as the capillary 54. The composition of the acrylamide solution is 3% T (g% of acrylamide) and 0.5% C (g% of N,N'-methylenebisacrylamide in acrylamide). The acrylamide gel is prepared by using N,N,N',N'-tetramethylethylenediamine as a polymerizing agent and ammonium peroxydisulfate. When a DNA fragment is measured by using a capillary gel produced in this example, the absorbance at 260 nm corresponding to the measurement wavelength of DNA is determined by using an UV absorption detector for HPLC modified for on-column detection.

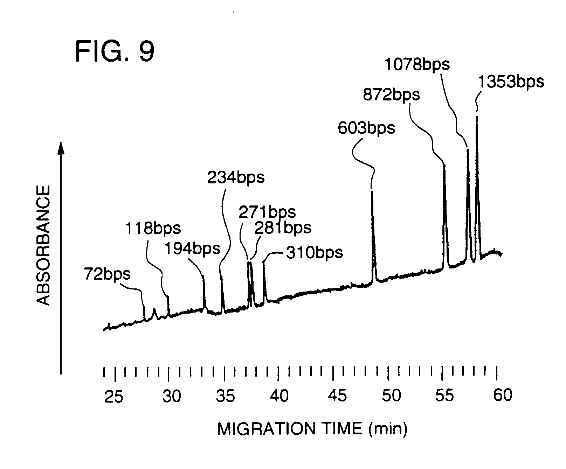

Fig. 9 shows the results of an example of the analysis of a DNA fragment obtained in an example of the embodiment of producing a capillary gel of the present invention, while Table 2 shows the measurement conditions therefor. As a result, it is proved that a mixture which is obtained by completely digesting φX 174 DNA with a restriction enzyme Hae III can be completely separated within 60 minutes.

**Table 2**

| Item | Condition |
|---|---|
| capillary | i.d.: 50 µm, o.d.: 375 µm, length: 50 cm |
| acrylamide gel | 3% T, 0.5% C |
| buffer | 90 mM Tris-borate, pH 8.3 |
| | 2.5 mM EDTA |
| applied voltage | 5.0 kV |
| sample | φX 174 DNA/Hae III |
| | digestion product |
| injection method | electrokinetic injection |
| | 5.0 kV, 5 s |

According to this embodiment of the present invention for producing a gel filled capillary for use in capillary gel electrophoresis, the formation of air bubbles in the polymerization step is suppressed by switching over the channel used as a flow channel for feeding a solution into a capillary to thereby feed a gel solution from another channel to pack in the gel in the capillary, and then polymerizing the acrylamide. Further the acrylamide solution can be fed under a high pressure since the solution is packed in the capillary by using a pump, for example. Thus, even a capillary having an inner diameter of 50 µm or less can be packed with an acrylamide gel. Furthermore, the acrylamide gel does not gel during the feeding operation since a gel solution is fed from another flow channel.

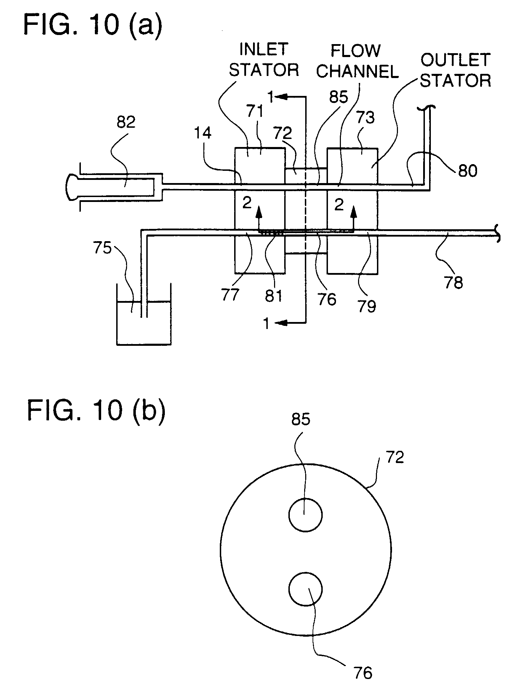

Figs. 10(a) and 10(b), 11(a) and 11(b) and 14 show an embodiment of the invention directed to providing a rotary channel switching valve used for feeding a sample into a capillary and, further, to providing a conductive partition that is provided between a buffer tank and a sample metering section. By this embodiment of the present invention, a minute amount of a sample can be injected into the capillary with a high degree of accuracy. Furthermore, since a conductive partition is located between the buffer tank and the sample metering section, disorders in the sample and the problem with diffusion of the sample by dilution can be suppressed and therefore the widening of the bands can be reduced. Since the conductive partition is used between the buffer tank and the sample metering section, the high voltage required for electrophoresis can be applied with no interference of the electrophoresis.

Fig. 10(a) is a schematic sectional view of part of an apparatus for a capillary gel electrophoresis apparatus having a construction of a microinjector embodying the present invention. In Fig. 10(b), a partial sectional view of the microinjector taken along line 1-1 is shown.

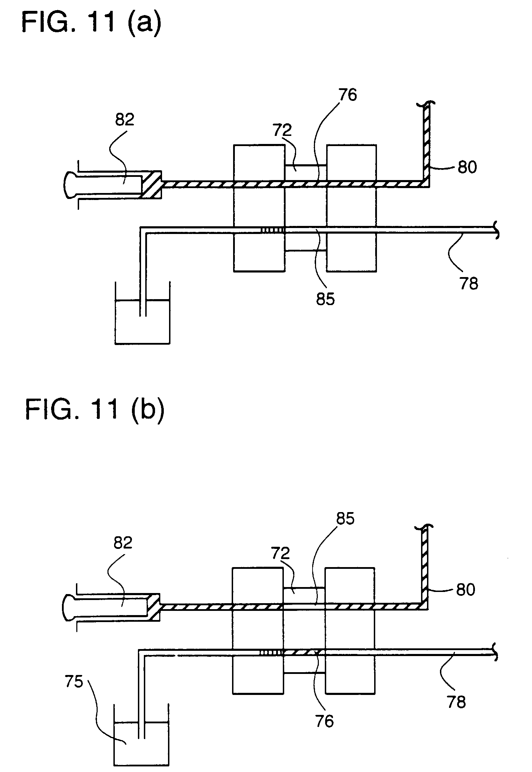

The microinjector, according to a preferred embodiment of the present invention as shown in the figures, has an inlet stator 71, a rotor 72 and an outlet stator 73. The inlet stator 71 is provided with a sample needle port 74 and a flow channel 77 for connecting a buffer tank 75 to a sample metering section 76 in the rotor 72. A conductive partition 81 is located in the flow channel 77 so as to prevent the sample from being diffused into the buffer tank 75. Examples of usable conductive partitions include porous glass, a film of a polymer such as cellulose, or a gel such as an acrylamide gel. The outlet stator 73 is provided with a connection port 79 for connecting the buffer tank 75 to a capillary 78 via the sample metering section 76 in the rotor 72 and a flow channel 80 with a drain. The rotor 72 is provided with a sample metering section 76 and a flow channel 85 for connecting the inlet stator 71 to the outlet stator 73. As shown in the side view of the rotor 72, in Fig. 11(b), the sample metering section 76 and the flow channel 85 are located symmetrically about the center point of the rotor 72, each having through bores of the same diameter.

The sample is injected into the capillary through rotor 72 in the following manner. First, the sample is injected into the sample metering section 76 by using a sample injection needle 82, as shown in Fig. 11(a). An excess amount of the sample is discarded through flow channel 80. During the injection of the sample, since a buffer solution can preliminarily flow in the electrophoresis apparatus, the sample used in the previous electrophoretic operation can be removed through the capillary 78. Subsequently, the rotor 72 is rotated by 180°, as shown in Fig. 11(b) to thereby connect the sample metering section 76 filled with the sample to the flow channel located between the capillary 78 and the buffer tank 75. Finally, a voltage is applied to cause electrophoresis so that the sample migrates into the capillary 78, where it can be analyzed.

As one example of using the microinjector of the foregoing embodiment, a fused silica capillary of 50 µm in inner diameter, 375 µm in outer diameter and 50 cm in length is used as the capillary. The composition of the acrylamide solution is 3% T (g% of acrylamide) and 0.5% C (g% of N,N'-methylenebisacrylamide in acrylamide). The acrylamide gel is prepared by using N,N,N,N-tetramethylethylenediamine as a polymerizing agent and ammonium peroxydisulfate.

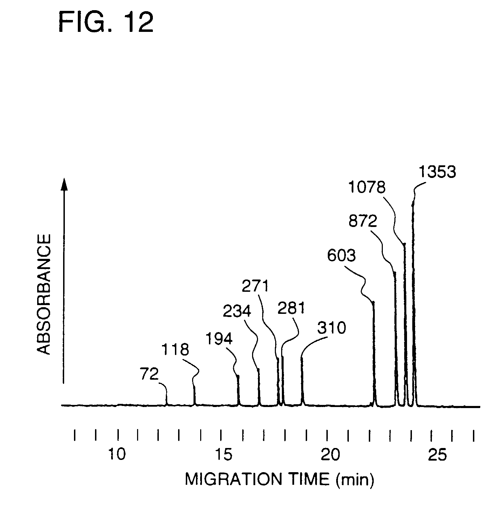

Fig. 12 shows an example of the result of the analysis of a DNA fragment obtained by analyzing the DNA fragment with a capillary gel electrophoretic apparatus with the use of the microinjector according to the present invention and measuring the absorbance at 260 nm, which corresponds to the measurement wavelength for DNA, by using an UV absorption detector for HPLC modified for on-column detection. The measurement conditions are given in Table 3. The experiment showed that a mixture obtained by completely digesting φX 174 DNA with a restriction enzyme Hae III can be completely separated within 25 minutes.

**Table 3**

| Item | Condition |
|---|---|
| capillary | i.d.: 50 µm, o.d.: 375 µm, length: 50 cm |
| acrylamide gel | 3% T, 0.5% C |
| buffer | 90 mM Tris-borate, pH 8.3 |
| | 1 mM ethidium bromide |
| | 2.5 mM EDTA |
| applied voltage | 15.0 kV |
| sample | φX 174 DNA/Hae III digestion product |

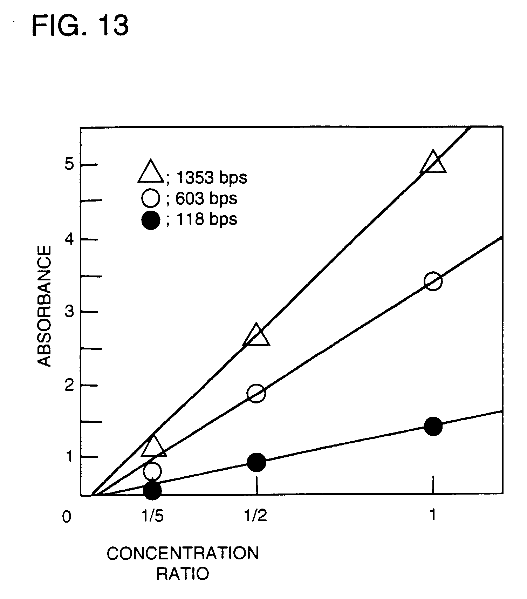

Fig. 13 shows the results of data provided under the foregoing conditions of Table 3. Even when the sample is diluted with distilled water, the measurement can be performed without any problem. Specifically, in Fig. 13, the abscissa indicates a concentration ratio (amount of sample/amount of sample + amount of distilled water), while the ordinate represents the absorbance. As Fig. 13 shows, by using the microinjector according to the present invention, absorbance data corresponding to the concentration ratio of the sample can be obtained.

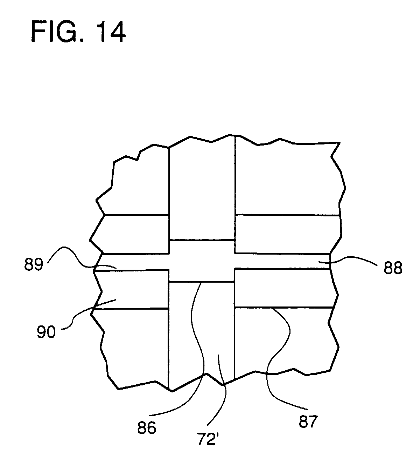

Fig. 14 shows a partial sectional view, schematically, taken along line 2-2 of Fig. 10(a) of a modified rotor 72', wherein the metering section 86 is provided with a diameter that is greater than the inner diameter 88 of capillary 87 and the diameter 89 of flow channel 90 so that slight misalignment following rotation thereof does not result in inadvertent flow blockage.

Although the invention has been disclosed with respect to the various embodiments, modifications and further embodiments are possible in accordance with the teachings presented in the specification and accompanying drawings.

## Claims

1. A method for analyzing a nucleic acid sample by conducting capillary electrophoresis, comprising the steps of:
first conducting capillary electrophoresis of the sample with a first capillary portion (14) filled with a first gel for separation of said sample by electromigration; and
second conducting capillary electrophoresis and optical detection of the sample with an optical detector (5) through a second capillary portion (15) having a second gel connected with said first capillary portion (14), wherein the second gel differs from said first gel in that the second gel has an increased light transmittance characteristic with respect to said first gel.

2. A method according to claim 1, wherein the nucleic acid to be analyzed has thousands of bases and the first conducting step uses an agarose gel as the first gel and the second conducting step uses a polyacrylamide gel as the second gel.

3. A method according to claim 1, wherein said first and second conducting steps use capillaries having an inner dimension of 100 µm or less as said first and second capillary portions, respectively, and said conducting optical detection step uses an on-column detector (5) incorporated with said second capillary (15).

4. A method according to claim 3, further comprising the steps of receiving an output signal from said on-column detector (5) and processing said output signal with a data processor (7) for providing results of the analyzing of the nucleic acid sample.

5. A method according to claim 1, further comprising the steps of filling a first capillary (14) with said first gel and filling a second capillary (15) with said second gel and then connecting said first and second capillaries together with a connector (6) to form said first and second capillary portions, respectively, said connecting establishing gel continuity and electrical conductivity between the first and second capillaries (14, 15).

6. A method according to claim 5, further comprising said first and said second capillary portions being axially aligned with one another in said joining step by resiliently urging (18,19) said first and second capillary portions together in the presence of a polyacrylamide gel to ensure continuity of the gel between the capillaries.

7. A method according to claim 5, wherein said first and second capillary portions (14, 15) are axially aligned with one another in said connecting step by disposing facing ends of said capillaries in a first block (22) having a groove (24) therein and resiliently urging (28) a second block (23) having a mating groove (25) formed therein toward said first block, including packing the grooves with a polyacrylamide gel.

8. A method according to claim 1, wherein at least one of said first and second capillary portions (14, 15) are filled with said first and second gels, respectively, by feeding a first solution (55) under high pressure from a first flow channel (59) connected to a supply of said first solution through a switching valve (52) to said one capillary (54);
injecting a second solution (56) for gelling into a second flow channel (57) through said switching valve; and then
connecting said first flow channel (59) to said second flow channel (57) and connecting said second flow channel (57) to said one capillary (54), respectively, through said switching valve (52) for filling said one capillary (54) with said gelling solution.

9. A method according to claim 8, wherein said step of feeding includes using a rotary switching valve (52) as said switching valve to connect a pump (51) for pumping the supply of said first solution (55) through said first flow channel (59) into said one capillary (54) and to connect an injector (56) containing said gelling solution to said second flow channel (57) when said rotary switching valve (52) is in a first position; and switching said rotary switching valve (52) to a second position to connect said pump (51) and said first flow channel (59) to said second flow channel (57) and to connect said second flow channel (57) to said one capillary (54) for filling said one capillary with said gelling solution.

10. A method according to claim 9, wherein prior to switching said rotary switching valve (52) to said second position, air is introduced into said second flow channel (57) so that after said switching of said rotary switching valve (52) to said second position, the air introduced in the second flow channel (57) separates said first solution from said gelling solution.

11. A method according to claim 1, wherein a sample is electrokinetically injected into said first capillary (78) by connecting a sample injector to a first flow channel (74) having a first passage (85) passing through a switching valve (71-73), and connecting a buffer solution (75) to said first capillary through a second flow channel (77) having a second passage (76) passing through the switching valve; and
switching the valve to a position wherein a portion of the first flow passage (85) within said switching valve is switched to be incorporated into said second flow channel (77) between said buffer solution (75) and said first capillary (78); and
electro-kinetically injecting the sample through said second flow passage (77) into the capillary.

12. A method according to claim 11, further comprising the step of partioning the sample in said portion of the first passage incorporated in said second flow channel from the buffer solution with a conductive partition (81) in the second flow channel.

13. A method according to claim 11, wherein said first flow passage (85) has an internal diameter greater than an internal diameter of said first and second flow channels (77,79).

14. An apparatus for analyzing a nucleic acid sample by capillary electrophoresis, comprising:
an electrophoretic section having a first capillary portion (14) filled with a first gel for receiving said sample and a second capillary portion (15) having a second gel connected with said first capillary portion (14);
said electrophoretic section having opposite ends disposed in first and second buffer tanks respectively having first and second electrodes connected to a high voltage power supply for causing migration of the sample through said electrophoretic section;
an optical detector (5) providing an output signal for detecting migration of the sample in said second capillary portion (15) wherein the second gel differs from said first gel in that the second gel has an increased light transmittance characteristic with respect to said first gel; and
means receiving and processing said output signal for providing results of the analysis of the sample.

15. An apparatus according to claim 14, wherein the nucleic acid to be analyzed has thousands of bases and the first gel is an agarose gel and the second gel is a polyacrylamide gel.

16. An apparatus according to claim 14, wherein said first and second capillary portions are capillaries having an inner dimension of 100 µm or less, respectively, and said optical detector is an on-column detector (5) incorporated with said second capillary (15).

17. An apparatus according to claim 14, further comprising said first and second capillary portions being first and second capillaries, respectively; and
a connector (6) for connecting said first and second capillaries for establishing gel continuity and electrical conductivity between the first and second capillaries (14, 15).

18. An apparatus according to claim 17, further comprising said connector having means for resiliently urging said first and second capillary portions together (18, 19) in the presence of a polyacrylamide gel to ensure continuity of the gel between the capillaries.

19. An apparatus according to claim 17, wherein said connector (5) has a first block (22) having a groove (24) formed therein and a device (28) for resiliently urging a second block (23) having a mating groove (25) formed therein toward said first block, whereby facing ends of said first and second capillaries are respectively axially aligned in said grooves (24, 25) of said first and second blocks and a polyacrylamide gel is packed in said grooves for maintaining gel continuity between the capillaries.

20. An apparatus according to claim 14, wherein at least one of said first and second capillary portions (14, 15) are filled by a filling device comprising:
a switching valve having at least first and second positions;
a pump (51) for feeding a first solution (55) under high pressure from a first flow channel (59) connected to a supply of said first solution through the switching valve (52) to said one capillary (54) when said switching valve is in said first position;
an injector for injecting a second solution (56) for gelling into a second flow channel (57) through said switching valve when said switching valve is in said first position; and
said switching valve connecting said first flow channel (59) to said second flow channel (57) and connecting said second flow channel (57) to said one capillary (54), respectively, in said second position for filling said one capillary (54) with said gelling solution.

21. An apparatus according to claim 20, wherein said switching valve is a rotary switching valve (52) connected between the pump (51) for pumping the supply of said first solution (55) through said first flow channel (59) into said one capillary (54) and connected between the injector (56) containing said gelling solution and said second flow channel (57) when said rotary switching valve (52) is in said first position; and said rotary switching valve (52), in said second position, being connected between said pump (51), through said first flow channel (59), and said second flow channel (57) and between said second flow channel (57) and said one capillary (54) for filling said one capillary with said gelling solution.

22. An apparatus according to claim 21, wherein, prior to switching said rotary switching valve (52) to said second position, said injector injects air into said second flow channel (57) so that after said switching of said rotary switching valve (52) to said second position, the air separates said first solution from said gelling solution.

23. An apparatus according to claim 14, further comprising a sample injector for electrokinetically injecting a sample into said first capillary portion (78), comprising:
a valve having a first flow passage communicating with a sample through a first flow channel and a second flow passage communicating with a second flow channel connected at one end to said first capillary and at the other end to a buffer solution; and
said valve having means for switching said first flow passage into said second flow channel for positioning the sample within said second flow channel.

24. An apparatus according to claim 23, wherein said valve has an inlet stator, an outlet stator and a rotor, wherein said rotor has said first and second flow passages, said second flow passage communicating with said buffer solution and said capillary when said valve is in a first position; and
said rotor being movable with respect to said inlet and outlet stator to a second position aligning said first passageway with said second flow channel and said second flow passageway with said first flow channel for positioning the sample within said second flow channel.

25. An apparatus according to claim 24, wherein said second flow channel has a conductive partition for separating the sample from the buffer solution when said rotor has been moved to the second position.

26. An apparatus according to claim 23, wherein said first flow passage (85) has an internal diameter greater than an internal diameter of said first and second flow channels (77, 79).

## Patentansprüche

1. Verfahren zum Analysieren einer Nukleinsäureprobe durch Kapillar-Elektrophorese, mit folgenden Schritten:
als erstes wird die Probe der Kapillar-Elektrophorese unterzogen, wobei ein erster Kapillarteil (14) mit einem ersten Gel zur Trennung der Probe durch Elektromigration gefüllt wird;
als zweites wird die Probe einer Kapillar-Elektrophorese und optischen Messung mit einem optischen Detektor (5) durch einen mit dem ersten Kapillarteil (14) verbundenen, mit einem zweiten Gel gefüllten zweiten Kapillarteil (15) unterzogen, wobei sich das zweite Gel vom ersten durch erhöhte Lichttransmission unterscheidet.

2. Verfahren nach Anspruch 1, wobei die zu analysierende Nukleinsäure Tausende von Basen aufweist, der erste Verfahrensschritt mit einem Agarosegel als erstem Gel und der zweite Verfahrensschritt mit einem Polyacrylamidgel als zweitem Gel arbeitet.

3. Verfahren nach Anspruch 1, wobei der erste und der zweite Verfahrensschritt mit Kapillaren einer Innenabmessung von 100 µm oder weniger als erstem und zweitem Kapillarteil arbeiten und wobei die optische Messung unter Verwendung eines in die zweite Kapillare (15) eingebauten säulenfesten Detektor (5) durchgeführt wird.

4. Verfahren nach Anspruch 3, wobei das Ausgangssignal von dem säulenfesten Detektor (5) aufgenommen und mittels eines Datenprozessors (7) verarbeitet wird, um Ergebnisse der Analyse der Nukleinsäureprobe zu erhalten.

5. Verfahren nach Anspruch 1, wobei eine erste Kapillare (14) mit dem ersten Gel und eine zweite Kapillare (15) mit dem zweiten Gel gefüllt wird und die beiden Kapillaren sodann über einen Verbinder (6) unter Bildung des ersten bzw. des zweiten Kapillarteils miteinander verbunden werden, wobei die Verbindung Kontinuität des Gels und elektrische Leitfähigkeit zwischen der ersten und der zweiten Kapillare (14, 15) herstellt.

6. Verfahren nach Anspruch 5, wobei der erste und der zweite Kapillarteil bei der Verbindung axial miteinander ausgerichtet werden, indem sie in Anwesenheit eines Polyacrylamidgels zur Gewährleistung der Kontinuität des Gels zwischen den Kapillaren elastisch zusammengedrückt (18, 19) werden.

7. Verfahren nach Anspruch 5, wobei der erste und der zweite Kapillarteil (14, 15) beim Verbinden axial miteinander ausgerichtet werden, indem ihre einander zugewandten Enden in einem mit einer Nut (24) versehen ersten Block (22) angeordnet werden und auf diesen ein mit einer dazu passenden Nut (25) versehener zweiter Block (23) elastisch gedrückt wird, wobei die Nuten mit einem Polyacrylamidgel ausgefüllt werden.

8. Verfahren nach Anspruch 1,
wobei mindestens einer der beiden Kapillarteile (14, 15) mit dem ersten bzw. dem zweiten Gel dadurch gefüllt wird, daß eine erste Lösung (55) unter Hochdruck aus einem über ein Schaltventil (52) an einen Vorrat der ersten Lösung angeschlossenen ersten Strömungskanal (59) der besagten einen Kapillare (54) zugeführt wird,
wobei in einen zweiten Strömungskanal (57) über das Schaltventil eine zweite Lösung (56) zum Gelieren eingeleitet wird, und
wobei anschließend der erste Strömungskanal (59) an den zweiten Strömungskanal (57) und dieser an die besagte eine Kapillare (54) über das Schaltventil (52) angeschlossen wird, um diese Kapillare (54) mit der Gelierlösung zu füllen.

9. Verfahren nach Anspruch 8, wobei bei der Zuführung als Schaltventil ein drehbares Schaltventil (52) verwendet wird, um eine Pumpe (51) zum Pumpen des Vorrats an erster Lösung (55) durch den ersten Strömungskanal (59) in die besagte eine Kapillare (54) und einen die Gelierlösung enthaltenden Injektor (56) mit dem zweiten Strömungskanal (57) zu verbinden, wenn das drehbare Schaltventil (52) in einer ersten Position steht, und wobei das drehbare Schaltventil (52) in eine zweite Position umgeschaltet wird, um die Pumpe (51) und den ersten Strömungskanal (59) mit dem zweiten Strömungskanal (57) und diesen mit der einen Kapillare (54) zu verbinden, um diese mit der Gelierlösung zu füllen.

10. Verfahren nach Anspruch 9, wobei vor dem Umschalten des drehbaren Schaltventils (52) in die zweite Position in den zweiten Strömungskanal (57) Luft eingeleitet wird, so daß diese nach dem Umschalten des drehbaren Schaltventils (52) in die zweite Position die erste Lösung von der Gelierlösung trennt.

11. Verfahren nach Anspruch 1, wobei eine Probe elektrokinetisch in die erste Kapillare (78) eingeführt wird, indem ein Probeninjektor an einen ersten Strömungskanal (74) angeschlossen wird, der eine ein Schaltventil (71-73) durchsetzende erste Durchführung (85) aufweist, und eine Pufferlösung (75) über einen zweiten Strömungskanal (77) mit einer das Schaltventil durchsetzenden zweiten Durchführung (76) mit der besagten ersten Kapillare verbunden wird,
wobei das Ventil in eine Position geschaltet wird, in der ein Teil der ersten Strömungsdurchführung (85) innerhalb des Schaltventils so geschaltet wird, daß er in dem zweiten Strömungskanal (77) zwischen der Pufferlösung (75) und der ersten Kapillare (78) liegt, und
wobei die Probe elektrokinetisch durch die zweite Strömungsdurchführung (77) in die Kapillare eingeleitet wird.

12. Verfahren nach Anspruch 11, wobei die Probe in dem Teil der in dem zweiten Strömungskanal gelegenen ersten Durchführung mit einer leitenden Trennwand (81) in dem zweiten Strömungskanal von der Pufferlösung abgeteilt wird.

13. Verfahren nach Anspruch 11, wobei die erste Strömungsdurchführung (85) einen größeren Innendurchmesser hat als der erste und der zweite Strömungskanal (77, 79).

14. Vorrichtung zum Analysieren einer Nukleinsäureprobe durch Kapillar-Elektrophorese, umfassend
einen Elektrophoreseabschnitt mit einem mit einem ersten Gel gefüllten ersten Kapillarteil (14) zur Aufnahme der Probe und einem ein zweites Gel enthaltenden, mit dem ersten Kapillarteil (14) verbundenen zweiten Kapillarteil (15),
wobei entgegengesetzte Enden des Elektrophoreseabschnitts in einem ersten bzw. einem zweiten Pufferbehälter angeordnet sind, die mit einer Hochspannungsquelle verbundene erste und zweite Elektroden enthalten, um eine Migration der Probe durch den Elektrophoreseabschnitt zu bewirken,
einen optischen Detektor (5) zur Erzeugung eines Ausgangssignals zur Messung der Probenmigration in dem zweiten Kapillarteil (15), wobei sich das zweite Gel von dem ersten durch erhöhte Lichttransmission unterscheidet, und
eine Einrichtung zum Empfangen und Verarbeiten des Ausgangssignals, um Ergebnisse der Probenanalyse zur Verfügung zu stellen.

15. Vorrichtung nach Anspruch 14, wobei die zu analysierende Nukleinsäure Tausende von Basen aufweist, das erste Gel ein Agarosegel und das zweite Gel ein Polyacrylamidgel ist.

16. Vorrichtung nach Anspruch 14, wobei der erste und der zweite Kapillarteil jeweils eine Innenabmessung von 100 µm oder weniger aufweisen und der optische Detektor ein in die zweite Kapillare (15) eingebauter säulenfester Detektor (5) ist.

17. Vorrichtung nach Anspruch 14, mit einer ersten und einer zweiten Kapillare als erstem bzw. zweitem Kapillarteil, und
einem Verbinder (6) zum Verbinden der ersten mit der zweiten Kapillare zur Herstellung von Kontinuität des Gels und elektrischer Leitfähigkeit zwischen der ersten und der zweiten Kapillare (14, 15).

18. Vorrichtung nach Anspruch 17, wobei der Verbinder eine Einrichtung zum elastisch Zusammendrücken (18, 19) des ersten und des zweiten Kapillarteils in Anwesenheit eines Polyacrylamidgels zur Gewährleistung der Kontinuität des Gels zwischen den Kapillaren aufweist.

19. Vorrichtung nach Anspruch 17, wobei der Verbinder (5) einen mit einer Nut (24) versehen ersten Block (22) und eine Einrichtung (28) zum elastischen Andrücken eines mit einer dazu passenden Nut (25) versehenen zweiten Blocks (23) gegen den ersten Block aufweist, wobei einander zugewandte Enden der ersten und der zweiten Kapillare in den Nuten des ersten bzw. des zweiten Blocks axial miteinander ausgerichtet sind und die Nuten zur Aufrechterhaltung der Kontinuität des Gels zwischen den Kapillaren mit einem Polyacrylamidgel ausgefüllt sind.

20. Vorrichtung nach Anspruch 14,
wobei mindestens einer der beiden Kapillarteile (14, 15) mittels einer Fülleinrichtung befüllt sind, die umfaßt:
ein Schaltventil (52) mit mindestens einer ersten und einer zweiten Position,
eine Pumpe (51) zum Zuführen einer ersten Lösung (55) unter Hochdruck von einem an einen Vorrat der ersten Lösung angeschlossenen ersten Strömungskanal (59) über das Schaltventil (52) in die besagte eine Kapillare (54), wenn das drehbare Schaltventil (52) in einer ersten Position steht,
einen Injektor zum Einleiten einer zweiten Lösung (56) zum Gelieren über das Schaltventil (52) in einen zweiten Strömungskanal (57), wenn das Schaltventil (52) in einer zweiten Position steht,
wobei das Schaltventil in der zweiten Position den ersten Strömungskanal (59) mit dem zweiten Strömungskanal (57) und diesen mit der einen Kapillare (54) verbindet, um diese mit der Gelierlösung zu füllen.

21. Vorrichtung nach Anspruch 20, wobei das Schaltventil ein drehbares Schaltventil (52) ist, das zwischen die Pumpe (51) zum Pumpen des Vorrats an erster Lösung (55) durch den ersten Strömungskanal (59) in die besagte eine Kapillare (54) und zwischen den die Gelierlösung enthaltenden Injektor (56) und den zweiten Strömungskanal (57) eingeschaltet ist, wenn das drehbare Schaltventil (52) in der ersten Position steht, und wobei das drehbare Schaltventil (52) in der zweiten Position zwischen der Pumpe (51), über den ersten Strömungskanal (59), und dem zweiten Strömungskanal (57) und zwischen diesem und der einen Kapillare (54) eingeschaltet ist, um diese mit der Gelierlösung zu füllen.

22. Vorrichtung nach Anspruch 21, wobei vor dem Umschalten des drehbaren Schaltventils (52) in die zweite Position der Injektor Luft in den zweiten Strömungskanal (57) einleitet, so daß diese nach dem Umschalten des drehbaren Schaltventils (52) in die zweite Position die erste Lösung von der Gelierlösung trennt.

23. Vorrichtung nach Anspruch 14, mit einem Probeninjektor zum elektrokinetischen Einleiten einer Probe in die erste Kapillare (78), umfassend
ein Ventil, das eine über einen ersten Strömungskanal mit einer Probe in Verbindung stehende erste Strömungsdurchführung und eine mit einem zweiten Strömungskanal verbundene zweite Strömungsdurchführung aufweist, wobei die zweite Strömungsdurchführung an einem Ende mit der ersten Kapillare und am zweiten Ende mit einer Pufferlösung in Verbindung steht, wobei
das Ventil eine Einrichtung zum Schalten der ersten Strömungsdurchführung in den zweiten Strömungskanal aufweist, um die Probe in diesem anzuordnen.

24. Vorrichtung nach Anspruch 23, wobei das Ventil einen Einlaßstator, einen Auslaßstator und einen Rotor aufweist, wobei der Rotor eine erste und eine zweite Strömungsdurchführung aufweist und die zweite Strömungsdurchführung mit der Pufferlösung und der Kapillare in Verbindung steht, wenn das Ventil sich in einer ersten Position befindet, und
wobei der Rotor bezüglich des Einlaß- und des Auslaßstators in eine zweite Position bewegbar ist, die die erste Durchführung auf den zweiten Strömungskanal und die zweite Strömungsdurchführung auf den ersten Strömungskanal ausrichtet, um die Probe in dem zweiten Strömungskanal anzuordnen.

25. Vorrichtung nach Anspruch 24, wobei der zweite Strömungskanal eine leitende Trennwand aufweist, um die Probe von der Pufferlösung zu trennen, wenn der Rotor in die zweite Position bewegt worden ist.

26. Vorrichtung nach Anspruch 23, wobei die erste Strömungsdurchführung (86) einen größeren Innendurchmesser hat als der erste und der zweite Strömungskanal (74, 77).

## Revendications

1. Procédé pour analyser un échantillon d'acide nucléique en réalisant une électrophorèse capillaire, comportant les étapes consistant à :
réaliser une première électrophorèse capillaire de l'échantillon à l'aide d'une première partie capillaire (14) remplie d'un premier gel pour séparer ledit échantillon par électromigration ; et
réaliser une seconde électrophorèse capillaire et une détection optique de l'échantillon à l'aide d'un détecteur optique (5) à travers une seconde partie capillaire (15) ayant un second gel connectée à ladite première partie capillaire (14), dans lequel le second gel diffère du premier gel en ce que le second gel a une caractéristique accrue de transmission de lumière par rapport audit premier gel.

2. Procédé selon la revendication 1, dans lequel l'acide nucléique à analyser a des milliers de bases et dans lequel la première étape de réalisation utilise un gel d'agarose en tant que premier gel et la seconde étape de réalisation utilise un gel de polyacrylamide en tant que second gel.

3. Procédé selon la revendication 1, dans lequel lesdites première et seconde étapes de réalisation utilisent des capillaires ayant une dimension intérieure de 100 µm ou moins en tant que première et seconde partie capillaire, respectivement, et ladite étape de réalisation de détection optique utilise un détecteur sur colonne (5) faisant corps avec ledit second capillaire (15).

4. Procédé selon la revendication 3, comportant de plus les étapes consistant à recevoir un signal de sortie provenant dudit détecteur sur colonne (5) et à traiter ledit signal de sortie à l'aide d'un processeur de données (7) pour fournir des résultats de l'analyse de l'échantillon d'acide nucléique.

5. Procédé selon la revendication 1, comportant de plus les étapes consistant à remplir un premier capillaire (14) à l'aide dudit premier gel et à remplir un second capillaire (15) à l'aide dudit second gel et ensuite à connecter ensemble lesdits premier et second capillaires à l'aide d'un connecteur (6) pour former lesdites première et seconde parties capillaires, respectivement, ladite connexion établissant une continuité de gel et une conductibilité électrique entre le premier et le second capillaire (14, 15).

6. Procédé selon la revendication 5, comportant de plus ladite première et ladite seconde partie capillaire qui sont alignées axialement l'une par rapport à l'autre dans ladite étape de jonction en poussant de manière élastique (18, 19) ladite première et seconde partie capillaire l'un vers l'autre en présence d'un gel de polyacrylamide pour assurer une continuité du gel entre les capillaires.

7. Procédé selon la revendication 5, dans lequel lesdites première et seconde parties capillaires (14, 15) sont alignées axialement l'une par rapport à l'autre dans ladite étape de connexion en disposant des extrémités se faisant face desdits capillaires dans un premier bloc (22) ayant à l'intérieur une gorge (24) et en poussant de manière élastique (28) un second bloc (23), ayant une gorge complémentaire (25) formée à l'intérieur en direction du premier bloc, comportant le remplissage des gorges à l'aide d'un gel de polyacrylamide.

8. Procédé selon la revendication 1, dans lequel au moins une desdites première et seconde parties capillaires (14, 15) est remplie desdits premier et second gels, respectivement, en envoyant une première solution (55) sous haute pression à partir d'un premier canal d'écoulement (59) connecté à une source de ladite première solution à travers une vanne de commutation (52) vers ledit premier capillaire (54) ;
en injectant une seconde solution (56) pour gélification dans un second canal d'écoulement (57) à travers ladite vanne de commutation ; et ensuite
en connectant ledit premier canal d'écoulement (59) audit second canal d'écoulement (57) et en connectant ledit second canal d'écoulement (57) audit premier capillaire (54), respectivement, à travers ladite vanne de commutation (52) pour remplir ledit premier capillaire (54) de ladite solution de gélification.

9. Procédé selon la revendication 8, dans lequel ladite étape d'alimentation consiste à utiliser une vanne de commutation rotative (52) en tant que dite vanne de commutation pour connecter une pompe (51) destinée à pomper la source de ladite première solution (55) à travers ledit premier canal d'écoulement (59) jusqu'audit premier capillaire (54) et pour connecter un injecteur (56) contenant ladite solution de gélification audit second canal d'écoulement (57) lorsque ladite vanne de commutation rotative (52) est dans une première position ; et à commuter ladite vanne de commutation rotative (52) vers une seconde position pour connecter ladite pompe (51) et ledit premier canal d'écoulement (59) audit second canal d'écoulement (57) et pour connecter ledit second canal d'écoulement (57) audit premier capillaire (54) pour remplir ledit premier capillaire de ladite solution de gélification.

10. Procédé selon la revendication 9, dans lequel avant de commuter ladite vanne de commutation rotative (52) vers ladite seconde position, de l'air est introduit dans ledit second canal d'écoulement (57), de sorte qu'après ladite commutation de ladite vanne de commutation rotative (52) vers ladite seconde position, l'air introduit dans le second canal d'écoulement (57) sépare ladite première solution de ladite solution de gélification.

11. Procédé selon la revendication 1, dans lequel un échantillon est injecté de manière électrocinétique dans ledit premier capillaire (78) en connectant un injecteur d'échantillon au premier canal d'écoulement (74), ayant un premier passage (85) passant à travers une vanne de commutation (71-73), et en connectant une solution tampon (75) audit premier capillaire à travers un second canal d'écoulement (77) ayant un second passage (76) passant à travers la vanne de commutation ; et
on commute la vanne vers une position dans laquelle une partie du premier passage d'écoulement (85) située dans ladite vanne de commutation est commutée pour être incorporée dans ledit second canal d'écoulement (77) entre ladite solution tampon (75) et ledit premier capillaire (78) ; et
on injecte de manière électrocinétique l'échantillon à travers ledit second passage d'écoulement (77) dans le capillaire.

12. Procédé selon la revendication 11, comportant de plus l'étape consistant à séparer l'échantillon situé dans ladite partie du premier passage incorporée dans ledit second canal d'écoulement de la solution tampon à l'aide d'une séparation conductrice (81) située dans le second canal d'écoulement.

13. Procédé selon la revendication 11, dans lequel ledit premier passage d'écoulement (85) a un diamètre intérieur supérieur au diamètre intérieur desdits premier et second canaux d'écoulement (77, 79).

14. Dispositif pour analyser un échantillon d'acide nucléique par électrophorèse capillaire, comportant :
un tronçon d'électrophorèse ayant une première partie capillaire (14) remplie d'un premier gel pour recevoir ledit échantillon et une seconde partie capillaire (15) ayant un second gel, connectée à ladite première partie capillaire (14) ;
ledit tronçon d'électrophorèse ayant des extrémités opposées disposées dans un premier et un second réservoir tampon respectivement ayant une première et seconde électrode connectées à une alimentation de courant à haute tension pour provoquer une migration de l'échantillon à travers ledit tronçon d'électrophorèse ;
un détecteur optique (5) fournissant un signal de sortie pour détecter la migration de l'échantillon dans ladite seconde partie capillaire (15) dans laquelle le second gel diffère du premier gel en ce que le second gel a une caractéristique accrue de transmission de lumière par rapport audit premier gel ; et
des moyens de réception et de traitement dudit signal de sortie pour fournir des résultats de l'analyse de l'échantillon.

15. Dispositif selon la revendication 14, dans lequel l'acide nucléique à analyser à des milliers de bases et le premier gel est un gel d'agarose et le second gel est un gel de polyacrylamide.

16. Dispositif selon la revendication 14, dans lequel lesdites première et seconde parties capillaires sont des capillaires ayant une dimension intérieure de 100 µm ou moins, respectivement, et ledit détecteur optique est un détecteur sur colonne (5) faisant corps avec ledit second capillaire (15).

17. Dispositif selon la revendication 14, comportant de plus ladite première et seconde partie capillaire qui sont un premier et un second capillaire, respectivement ; et
un connecteur (6) pour connecter lesdites premier et second capillaires afin d'établir une continuité de gel et une conductibilité électrique entre les premier et second capillaires (14, 15).

18. Dispositif selon la revendication 17, comportant de plus ledit connecteur qui a des moyens pour pousser l'une vers l'autre de manière élastique lesdites première et seconde parties capillaires (18, 19) en présence d'un gel de polyacrylamide pour assurer la continuité du gel entre les capillaires.

19. Dispositif selon la revendication 17, dans lequel ledit connecteur (5) a un premier bloc (22) ayant une gorge (24) formée dans celui-ci et un dispositif (28) pour pousser de manière élastique un second bloc (23) ayant une gorge complémentaire (25) formée dans celui-ci, en direction dudit premier bloc, de sorte que des extrémités se faisant face desdits premier et second capillaires sont respectivement alignées axialement dans lesdites gorges (24, 25) desdits premier et second blocs et qu'un gel de polyacrylamide est rempli dans lesdites gorges pour maintenir une continuité de gel entre les capillaires.

20. Dispositif selon la revendication 14, dans lequel au moins une première desdites première et seconde parties capillaires (14, 15) est remplie par un dispositif de remplissage comportant :
une vanne de commutation ayant au moins une première et une seconde position ;
une pompe (51) pour envoyer une première solution (55) sous haute pression à partir d'un premier canal d'écoulement (59) connecté à une source de ladite première solution à travers la vanne de commutation (52) vers ladite première partie capillaire (54) lorsque ladite vanne de commutation est dans ladite première positon ;
un injecteur pour injecter une seconde solution (56) pour gélification dans un second canal d'écoulement (57) à travers ladite vanne de commutation lorsque ladite vanne de commutation est dans ladite première position ; et
ladite vanne de commutation connectant ledit premier canal d'écoulement (59) audit second canal d'écoulement (57) et connectant ledit second canal d'écoulement (57) à ladite première partie capillaire (54), respectivement, dans ladite seconde position pour remplir ladite première partie capillaire (54) de ladite solution de gélification.

21. Dispositif selon la revendication 20, dans lequel ladite vanne de commutation est une vanne de commutation rotative (52) connectée entre ladite première partie capillaire (54) et la pompe (51) pour pomper la source de ladite première solution (55) à travers ledit premier canal d'écoulement (59) jusqu'à ladite première partie capillaire (54) et connectée entre l'injecteur (56) contenant la solution de gélification et ledit second canal d'écoulement (57) lorsque ladite vanne de commutation rotative (52) est dans ladite première position ; et dans ladite seconde position, ladite vanne de commutation rotative (52), étant connectée entre ladite pompe (51), à travers ledit premier canal d'écoulement (59), et ledit second canal d'écoulement (57) et entre ledit second canal d'écoulement (57) et ladite première partie capillaire (14) pour remplir ladite première partie capillaire de ladite solution de gélification.

22. Dispositif selon la revendication 21, dans lequel, avant la commutation de ladite vanne de commutation rotative (52) vers ladite seconde position, ledit injecteur injecte de l'air dans ledit second canal d'écoulement (57) de sorte qu'après ladite commutation de ladite vanne de commutation rotative (52) vers ladite seconde position, l'air sépare ladite première solution de ladite solution de gélification.

23. Dispositif selon la revendication 14, comportant de plus un injecteur d'échantillon pour injecter de manière électrocinétique un échantillon dans ladite première partie capillaire (78), comportant :
une vanne ayant un premier passage d'écoulement communiquant avec un échantillon à travers un premier canal d'écoulement et un second passage d'écoulement communiquant avec un second canal d'écoulement connecté au niveau d'une extrémité à ladite première partie capillaire, et au niveau de l'autre extrémité à une solution tampon ; et
ladite vanne ayant des moyens pour commuter ledit premier passage d'écoulement dans ledit second canal d'écoulement pour positionner l'échantillon dans ledit second canal d'écoulement.

24. Dispositif selon la revendication 23, dans lequel ladite vanne a un stator d'entrée, un stator de sortie et un rotor, ledit rotor ayant lesdits premier et second passages d'écoulement, ledit second passage d'écoulement communiquant avec ladite solution tampon et ladite partie capillaire lorsque ladite vanne est dans une première position ; et
ledit rotor pouvant être déplacé par rapport auxdits stators d'entrée et de sortie vers une seconde position, en alignant ledit premier trajet de passage avec ledit second canal d'écoulement et ledit second trajet de passage d'écoulement avec ledit premier canal d'écoulement pour positionner l'échantillon dans ledit second canal d'écoulement.

25. Dispositif selon la revendication 24, dans lequel ledit second canal d'écoulement a une séparation conductrice pour séparer l'échantillon de la solution tampon lorsque ledit rotor a été déplacé vers la seconde position.

26. Dispositif selon la revendication 23, dans lequel ledit premier passage d'écoulement (85) a un diamètre intérieur supérieur au diamètre intérieur desdits premier et second canaux d'écoulement (77, 79).
